# EUROPÄISCHE PATENTSCHRIFT

(11) **EP 2 030 816 B1**
(45) Veröffentlichungstag und Bekanntmachung des Hinweises auf die Patenterteilung: **22.05.2013**
(21) Anmeldenummer: 08015377.8
(22) Anmeldetag: 01.09.2008
(51) Int. Cl.: B60H 1/00

(54) **Klimaanlage für ein Kraftfahrzeug mit einer Fondraumklappe zum Mischen und Verteilen der Luft**
Vehicle air conditioner with a rear space damper door for mixing and distributing air
Climatisation de véhicule avec un clapet de zone arrière pour mélanger et distribuer l'air

(30) Priorität: 03.09.2007 DE 102007041689
(43) Veröffentlichungstag der Anmeldung: 04.03.2009
(73) Patentinhaber: Behr GmbH & Co. KG, 70469 Stuttgart (DE)
(72) Erfinder: Lindauer, Sascha, 73553 Altdorf (DE); Otzelberger, Norbert, 70376 Stuttgart (DE); Burkhardt, Carsten, 74653 Künzelsau (DE); Schweizer, Gebhard, 71229 Leonberg (DE)
(74) Vertreter: Grauel, Andreas

(56) Entgegenhaltungen:
- EP-A1- 1 535 770
- FR-A1- 2 844 483
- US-A1- 2004 069 484

## Beschreibung

Die Erfindung betrifft eine Klimaanlage für ein Kraftfahrzeug mit einem Gehäuse, einer im Gehäuse angeordneten Heizvorrichtung, mehreren im Gehäuse ausgebildeten Luftkanälen, einen im Gehäuse ausgebildeten ersten Auslassbereich, zum Versorgen eines ersten Bereiches mit temperierter Luft, und einen im Gehäuse ausgebildeten zweiten Auslassbereich zum Versorgen eines zweiten Bereiches mit temperierter Luft.

Aus dem Stand der Technik sind unterschiedliche Klimaanlagen für Kraftfahrzeuge bekannt. So offenbart etwa die WO 2006/027219 A2 eine modulare Kraftfahrzeugklimaanlage mit einem Verdampfer, einem Heizer, einem elektrischen Zuheizer sowie mehreren Mischklappen und separaten Verteilungsklappen.

Auch aus der US 2005/0118944 A1 sowie der FR 2862911 ist eine Klimaanlage mit einem Verdampfer und einem Heizer bekannt. Dort wird über eine zweite Mischklappe eine bestimmte Menge an Kalt- und/ oder Warmluft zugeführt und nachfolgend über eine Verteilungsklappe einem Fondfußraumkanal oder einem Fondbelüftungskanal zugeführt.

Ähnliche Kraftfahrzeugklimaanlagen sind auch aus den Druckschriften US 2004/0016536 A1, DE 100 31 534 A1, DE 695 06 364 C2, EP 1 225 071 A1, US 4,390,124, FR 2778152 und FR 2795684 bekannt.

Die Klimaanlagen aus dem Stand der Technik erfordern zumeist viel Bauraum, kinematische Kopplungen für die zahlreichen Klappen und hohe Fertigungsaufwendungen für eine Temperatur- und Verteilungseinstellung bezüglich der Luftzufuhr in den Fondbereich des Kraftfahrzeuges.

Die EP 1 535 770 A1, die den nächstliegenden Stand der Technik darstellt, offenbart eine Klimaanlage, die eine einfachere Temperatureinstellung und Luftverteilung für den Fondbereich zur Verfügung zu stellt. Insbesondere bei Unterteilung der Luftzufuhr des Fondbereiches in einen Fußbereich und einen Belüftungsbereich wird hier eine einfachere und damit kostengünstigere Lösung zur Verfügung gestellt.

Es ist die Aufgabe der Erfindung, eine weiter verbesserte Klimaanlage zur Verfügung zu stellen. Diese Aufgabe wird durch den Merkmalen des Anspruchs 1 gelöst. Bei der erfindungsgemäβen Klimaanlage wird eine einzige Fondraumklappe stromabwärts von der Heizvorrichtung zum Mischen von Warm- und Kaltluft sowie zum Verteilen der aus dem Fondfußraumversorgungsauslass und dem Fondbelüftungsauslass zu entlassenden Luft angeordnet. Unter "Verteilen" wird dabei auch ein "Leiten" verstanden.

Durch eine derartige Ausgestaltung werden die bisher notwendigen Klappen vor und nach der Heizvorrichtung zum Vorsehen einerseits einer angemessen temperierten Luftmenge und andererseits zum Aufteilen dieser angemessen temperierten Luftmenge auf die jeweiligen Auslässe vermieden. Die Folge ist ein geringerer Bauraumbedarf durch eine kompaktere Bauweise. Ferner wird der Aufbau der Klimaanlage vereinfacht und so auch der Fertigungsaufwand verringert.

In den Unteransprüchen werden Ausführungsformen beansprucht und nachfolgend näher beschrieben, die besonders vorteilhaft sind.

In einer bevorzugten Ausführungsform weist die Klimaanlage in ihrem Gehäuse einen Verdampfer auf, der kalte Luft erzeugt, um die Innenraumtemperatur des Kraftfahrzeuges unter die Außenlufttemperatur zu senken. Dadurch ist eine gewünschte Klimatisierung mittels Kaltluft realisierbar.

Um ein Entkoppeln der in den Frontbereich geleiteten Luft von der in den . Fondbereich geleiteten Luft, insbesondere bezüglich der Temperatur, zu erreichen, ist es von Vorteil, einen Bypasskanal zum erwärmungslosen Vorbeiführen der Kaltluft an der Heizvorrichtung vorzusehen, der vorzugsweise unterhalb der Heizvorrichtung angeordnet ist. Durch das Anordnen des Bypasskanals unterhalb der Heizvorrichtung kann ein Schichten der Luft in Abhängigkeit von der Temperatur besonders gut erreicht werden.

Unter dem Begriff "unterhalb" ist im Weiteren die Anordnung anzusehen in der die Klimaanlage in Bezug auf die Längsachse des Fahrzeuges verbaut ist. Im Weiteren wird davon ausgegangen, dass die Längsachse des Fahrzeuges parallel zu einer Längsachse durch die Klimaanlage angeordnet ist. Es ist jedoch auch möglich, dass die Längsachse der Klimaanlage quer zur Längsachse des Fahrzeuges ausgerichtet ist.

Die Heizvorrichtung ist erfindungsgemäβ von einem, eine Luftzufuhr zur Heizvorrichtung verhindernden Gehäuseabschnitt umgeben, der eine Öffnung stromaufwärts von der Heizvorrichtung aufweist, die durch eine Resterwärmungsklappe verschließbar ist. Ist diese Resterwärmungsklappe verschlossen, so ist durch den Nutzer des Kraftfahrzeuges eine maximale Kühlleistung abrufbar, ohne dass diese durch zwangsweise durch die Heizvorrichtung strömende und sich dabei erwärmende Luft gemindert wird.

Vorzugsweise ist in dem Gehäuseabschnitt eine weitere stromaufwärts der Heizvorrichtung angeordnete Öffnung zum Hindurchleiten von Kaltluft zum zweiten Auslassbereich durch die Heizvorrichtung vorgesehen. Durch diese Öffnung kann eine Warmluftzufuhr in den Fondbereich unabhängig von der Warmluftzufuhr in den Frontbereich erfolgen.

Zur Vermeidung von großen Strömungsverlusten ist es von Vorteil, wenn die Fondraumklappe im unteren Bereich der Klimaanlage angeordnet ist, vorzugsweise auf Höhe der Unterkante der Heizvorrichtung.

Vorteilhaft ist es ferner, den Fondfußraumversorgungsauslass neben dem Fondbelüftungsauslass, bevorzugt beiderseits des Fondbelüftungsauslasses, weiter bevorzugt auf im Wesentlichen gleicher Höhe zum Fondbelüftungsauslass anzuordnen. Die temperierte Luft lässt sich so auf die rechte und linke Seite des Kraftfahrzeuges in den Fondfußraum leiten.

Zur Vermeidung von Strömungsverlusten und zur Vermeidung des ungewünschten Vermischens von unterschiedlich warmer Luft, ist es von Vorteil, die Fondraumklappe zu unterteilen. Dies erfolgt bevorzugt durch sich quer zur Drehachse der Fondraumklappe erstreckende Scheiben, die in einem mittleren Klappenbereich angeordnet sind und zwei sich außerhalb davon befindliche, seitliche Klappenbereiche. Diese Gestaltung verhindert ein Vermischen der über die seitlichen Klappenbereiche zu dem Fondfußraumversorgungsauslass geleiteten Luft mit der über den mittleren Klappenbereich geleiteten Luft.

In einer Ausführungsform weist der mittlere Klappenbereich bevorzugt einen, am Rand der dem Fondbelüftungsauslass zugewandten Leitfläche veriaufenden Funktionssteg auf, welcher sich im Wesentlichen senkrecht davon und im Wesentlichen quer zur Richtung der Warmluftzufuhr erstreckt. Zur Einleitung eines maximalen Kaltluftstroms in den Fondraum verhindert dieser Funktionssteg eine Warmluftzufuhr zum Fondbelüftungsauslass, wodurch ausschließlich Kaltluft vom seitlichen Klappenbereich zu dem Fondfußraumversorgungsauslass gelangt. In einer weiteren bevorzugten Ausführungsform ist der Funktionssteg schalenförmig ausgeformt, insbesondere angepasst an die Außenkontur der sich quer zur Drehachse der Fondraumklappe erstreckenden Scheiben.

Es wird allgemein als unangenehm empfunden, wenn die Füße stark gekühlt werden. Daher ist es von besonderem Vorteil, die Fondraumklappe so auszubilden und anzuordnen, dass in einer Extremstellung, in der ausschließlich Kaltluft zu dem Fondbelüftungsauslass gelangt, der seitliche Klappenbereich eine Luftzufuhr zu dem Fondfußraumversorgungsauslass verhindert.

Besonders effizient und einfach lässt sich dies realisieren, wenn der seitliche Klappenbereich den Fußraumversorgungsauslass verschließt.

Vorzugsweise wird besonders kostengünstig ein zwangsgekoppeltes Stellelement realisiert, wenn der mittlere und seitliche Klappenbereich der Fondraumklappe sowie die Scheiben aus einem integralen Bauteil bestehen. Dieses Bauteil umfasst bevorzugt auch eine Welle, durch welche die Drehachse der Fondraumklappe verläuft. Bei einer solchen Ausführung erfolgt

nur eine geringe Vermischung der den unterschiedlichen Bereichen zugeführten Luftmengen.

In einer bevorzugt Ausführungsform ist das Gehäuse entlang einer Ebene, in der seine Längsachse verläuft, zweigeteilt. Hierdurch wird eine besonders einfache und schnelle Montierbarkeit des Gehäuses erreicht.

Zur Vermeidung einer ungewollten Erwärmung des Kraftfahrzeug-Innenraums ist in einer bevorzugten Ausführungsform zwischen der Resterwärmungsklappe und dem Gehäuseabschnitt eine Dichteinrichtung angeordnet.

Vorzugsweise ist die Resterwärmungsklappe mit einer Temperaturkinematik des Fondbereiches, also des ersten Auslassbereiches gekoppelt. In diesem Fall kann ein zusätzliches Betätigungselement entfallen. Eine unabhängige Regelung der drei Sektionen ist dann nicht möglich.

Eine symmetrische Aufteilung zum unabhängigen Regeln von vier Zonen ist ebenfälls realisierbar.

Für eine Montage der einzelnen Komponenten ist es ferner von Vorteil, wenn das Gehäuse einen Modulabschnitt aufweist, in dem der Fondfußraumversorgungslass, der Fondbelüftungsauslass und die Fondraumklappe angeordnet sind.

Wird die Klimaanlage in einem Fahrzeug untergebracht, in dem kein Fondraum vorhanden ist oder die Belüftung des Fondraums ungewünscht ist, so lässt sich vorteilhafter Weise der Bereich, in dem der Modulabschnitt anzuordnen ist, durch eine Platte kostengünstig verschließen oder die Öffnung einfach mittels Verspritzens verschließen.

Diese Erfindung wird anhand eines Ausführungsbeispieles mit Hilfe einer Zeichnung näher erläuternt. Dabei zeigen:
- Fig. 1: eine schematische Ansicht auf eine Klimaanlage mit einem Gehäuse in perspektivischer Ansicht parallel zur Längsachse des Gehäuses,
- Fig. 2: eine schematische Querschnittsansicht durch die Klimaanlage entlang der Linie II aus Fig. 1,
- Fig. 3: eine schematische perspektivische Darstellung eines beispielhaften Modulabschnitts des Gehäuses der Klimaanlage aus Sicht des Fondbereiches, versetzt zur Längsachse des Gehäuses,
- Fig. 4: eine schematische perspektivische Darstellung des Modulabschnittes des Gehäuses der Klimaanlage in Richtung des Fondbereiches, versetzt zur Längsachse des Gehäuses,
- Fig. 5: eine schematische perspektivische Darstellung einer Fondraumklappe, die in dem Modulabschnitt angeordnet ist,
- Fig. 6a: eine schematische perspektivische Darstellung eines rechten Teiles des Modulabschnittes des Gehäuses der Klimaanlage, wobei die Fondraumklappe nicht eingesetzt ist,
- Fig. 6b: eine schematische perspektivische Darstellung des rechten Teiles des Modulabschnittes des Gehäuses der Klimaanlage aus Fig. 6a, wobei die Fondraumklappe im eingesetzten Zustand gestrichelt dargestellt ist,
- Fig. 7: eine Ansicht des Modulabschnittes aus Sicht des Fondbereiches, in der die Position der Schnittebenen, wie sie in den Figuren 8 bis 11 angegeben sind, dargestellt ist,
- Fig. 8a: eine schematische Schnittdarstellung entlang der Ebene A-A aus Fig. 7, wobei die Fondraumklappe eine Stellung einnimmt, in der ausschließlich Warmluft in den Fondfußraum gelangt und Warmluft zum Beheizen des Fondbelüftungsraumes genutzt wird,
- Fig. 8b: eine schematische Schnittdarstellung entlang der Ebene B-B aus Fig. 7 durch den Modulabschnitt und die Fondraumklappe, wobei die Fondraumklappe dieselbe Stellung einnimmt wie in Fig. 8a,
- Fig. 9a: eine Mischstellung der Fondraumklappe im Schnitt entlang der Ebene A-A aus Fig. 7, in einer Stellung der Fondraumklappe in der sich Warm- und Kaltluft vermischen,
- Fig. 9b: eine schematische Schnittdarstellung entlang der Ebene B-B aus Fig. 7 durch den Modulabschnitt und die Fondraumklappe, wobei die Fondraumklappe dieselbe Stellung einnimmt, wie die in Fig. 9a dargestellte Klappe, so dass sich auch im Fondbelüftungsbereich Warm- und Kaltluft mischen,
- Fig. 10a: eine Schnittdarstellung entlang der Ebene A-A aus Fig. 7, die die Fondraumklappe in einer Stellung darstellt, in der lediglich Kaltluft in den Fondfußraumbereich gelangt,
- Fig. 10b: einen Schnitt entlang der Ebene B-B aus Fig. 7, wobei die Fondraumklappe dieselbe Stellung einnimmt, wie in Fig. 10a, so dass aufgrund der verschließenden Wirkung eines Funktionssteges auf der Fondraumklappe, der im mittleren Klappenbereich angeordnet ist, lediglich Kaltluft in den Fondbelüftungsbereich geführt wird,
- Fig. 11a: einen Schnitt durch den Modulabschnitt und die Fondraumklappe entlang der Linie A-A aus Fig. 7, wobei die Fondraumklappe in einer Extremstellung positioniert ist, in der ein seitlicher Klappenbereich den Fondfußraumversorgungsauslass von Kaltluftzufuhr und Warmluftzufuhr abtrennt und
- Fig. 11b: eine schematische Schnittdarstellung durch den Modulabschnitt und die Fondraumklappe entlang der Ebene B-B aus Fig. 7, wobei die Fondraumklappe in derselben Stellung befindlich ist, wie in Fig. 11a, so dass lediglich Kaltluft in den Fondbelüftungsbereich gelangen kann.

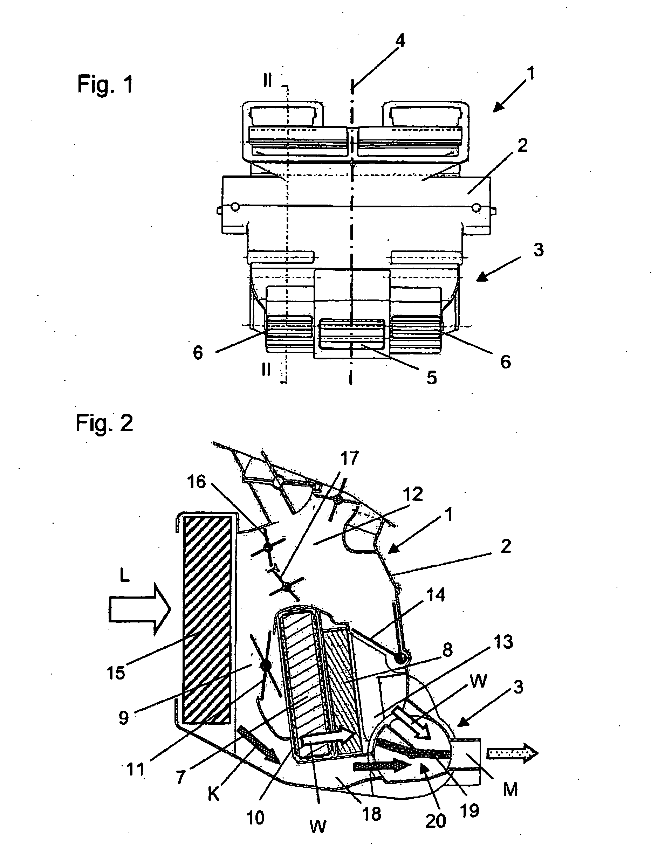

In Fig. 1 ist eine Klimaanlage 1 dargestellt. Die Klimaanlage weist ein Gehäuse 2 auf. Das Gehäuse weist einen Abschnitt auf, der als Modulabschnitt 3 bezeichnet wird. Der Modulabschnitt 3 ist entlang einer Längsachse 4 des Gehäuses 2 zweigeteilt ausgeführt.

An einem, dem restlichen Gehäuse 2 abgewandten, entfernten Ende des Modulabschnitts 3 ist ein Fondbelüftungsauslass 5 ansatzweise kanalförmig ausgebildet.

In Fig. 2 ist ein Schnitt durch die Klimaanlage 1 mit dem Gehäuse 2 dargestellt, wobei in dem Gehäuse 2 eine Heizvorrichtung 7 angeordnet ist. In dem in Fig. 2 dargestellten Ausführungsbeispiel wird die Heizvorrichtung 7 durch einen elektrischen Zuheizer, hier ein PTC-Zuheizer 8, ergänzt. Die Heizvorrichtung 7 und der PTC-Zuheizer 8 sind derart in einen Abschnitt des Gehäuses 2 eingebettet, dass Heizluft lediglich durch eine erste Öffnung 9 und eine zweite Öffnung 10 zu der Heizvorrichtung 7 und dem PTC-Zuheizer 8 gelangen kann. Die erste Öffnung 9 ist durch eine Resterwärmungsklappe 11 verschließbar. Zwischen der Resterwärmungsklappe 11 und dem Abschnitt des Gehäuses 2, der die Heizvorrichtung 7 umgibt, kann eine Dichteinrichtung vorgesehen sein.

Wird keine Dichteinrichtung verwendet, so dient die Resterwärmungsklappe 11 lediglich als Leitelement. In diesem Fall kann ein Leckluftstrom auftreten, der in bestimmten Ausführungen auch gewollt ist. Auch bei geschlossener Resterwärmungsklappe 11 kann dann Luft über die Randbereiche der Resterwärmungsklappe 11 zur Heizvorrichtung 7 gelangen.

Unterhalb der ersten Öffnung, die durch die Resterwärmungsklappe 11 verschließbar ist, ist hingegen zweite Öffnung 10 erfindungsgemäβ nicht durch eine Klappe verschließbar ausgeführt. Somit gelangt im unteren Bereich der Heizvonichtung 7 immer Luft durch die zweite Öffnung 10 hindurch zur Heizvorrichtung 7. Diese wird dort erwärmt und tritt nachfolgend im unteren Bereich der Klimaanlage 1 aus der Heizvorrichtung 7 aus.

Die Klimaanlage 1 mit dem Gehäuse 2 ist so strukturiert, dass zwei voneinander trennbare Auslassbereiche 12 und 13 vorliegen. Der erste Auslassbereich 12 ist oberhalb des zweiten Auslassbereiches 13 angeordnet. Eine Temperaturklappe 14 trennt den ersten Auslassbereich 12 vom zweiten Auslassbereich 13.

In dem Gehäuse 2 ist auch ein Verdampfer 15 vorgesehen, der mit Frischluft L beaufschlagt wird. Die Frischluft L wird beim Durchtreten durch den Verdampfer gekühlt, so dass sie als Kaltluft K bezeichnet wird. Die Kaltluft K kann ohne Erwärmung bei Durchtritt durch zwei Öffnungen in den ersten Auslassbereich 12 gelangen. Diese zwei Öffnungen sind durch Temperaturklappen 16 und 17 verschließbar. Alternativ kann die Kaltluft auch durch die erste Öffnung 9 zur Heizvorrichtung 7 gelangen, dort erwärmt werden und bei geöffneter Temperaturklappe 14 in den ersten Auslassbereich 12 gelangen.

Es ist ferner möglich, eine Mischung der Kaltluft K, die durch die mittels der Temperaturklappen 16 und 17 verschließbare Öffnung hineingelangende Kaltluft mit der durch die Temperaturklappe 14 verschließbare Öffnung hineingelangende Warmluft W, vorzunehmen. Eine entsprechend temperierte Luft verlässt dann bei Öffnung entsprechender Regelelemente den ersten Auslassbereich 12 durch so genannte Entfrosterdüsen, Mittelkonsolenbelüftungsdüsen und/ oder Fußraumbelüftungsdüsen. Die Luft, die aus dem ersten Auslassbereich entlassen wird, beaufschlagt den Fahrer- und/ oder Passagierraum im Vorderbereich des Fahrzeugs.

Es ist möglich, die Klimaanlage 1 und insbesondere das Gehäuse 2 derart zweiteilig auszugestalten, dass eine Temperaturregelung auf der Fahrer - und Beifahrerseite im Frontbereich des Fahrzeuges unabhängig voneinander möglich ist.

Die durch die erste Öffnung hindurch gelangende Kaltluft oder die durch die zweite Öffnung 10 hindurch gelangende Kaltluft wird durch die Heizvorrichtung 7 und/ oder den PTC-Zuheizer 8 erwärmt und gelangt dadurch in den zweiten Auslassbereich 13. Die erhaltene Warmluft W kann alternativ auch als Heiß- oder Heizluft bezeichnet werden.

Unterhalb des die Heizvorrichtung 7 aufnehmenden Gehäuseabschnittes des Gehäuses 2 ist ein Bypasskanal 18 ausgeformt. Durch den Bypasskanal 18 gelangt lediglich Kaltluft K, die aufgrund der durch das Gehäuse 2 vorgegebenen Trennung zu der Heizvorrichtung 7 und dem PTC-Zuheizer 8 nicht direkt erwärmt wird. Diese Kaltluft wird in Richtung des zweiten Auslassbereiches 13 geleitet. Am entfernten Ende des zweiten Auslassbereiches 13 ist der Modulabschnitt 3 angebunden. Der Modulabschnitt 3 ist mit dem Gehäuse 2 entweder integral verbunden ausgeführt, verklebt, verspritzt oder auf sonstige Weise verbunden, Im Übergangsbereich des Gehäuses 2 zum Modulabschnitt 3 ist allerdings das Austreten von Luft baulich verhindert.

Der Modulabschnitt 3 weist eine Fondraumklappe 19 auf. Die Fondraumklappe 19 erstreckt sich durch einen Fondversorgungsbereich 20. Kalt- und/oder Warmluft, die in den Fondversorgungsbereich 20 gelangt, wird über den Fondbelüftungsauslass 5 oder die beiden Fondfußraumversorgungsauslässe 6 in den Fondfußraum, einmal auf die linke Seite des Kraftfahrzeuges und einmal auf die rechte Seite des Kraftfahrzeuges, sowie in einen oberhalb des Fondfußraums befindlichen Bereich, der als Fondbelüftungsbereich bezeichnet wird, geleitet

In Fig. 2 ist der Fondraumklappenbereich angrenzend an den linken Fondfußraumversorgungsauslass 6, wie in Fig. 1 entlang der Ebene II dargestellt, visualisiert. In Fig. 2 ist die Fondraumklappe 19 in einer Stellung befindlich, in der Kaltluft K und Warmluft W aus dem zweiten Auslassbereich 13 sich zu einem Mischstrom M vermischen.

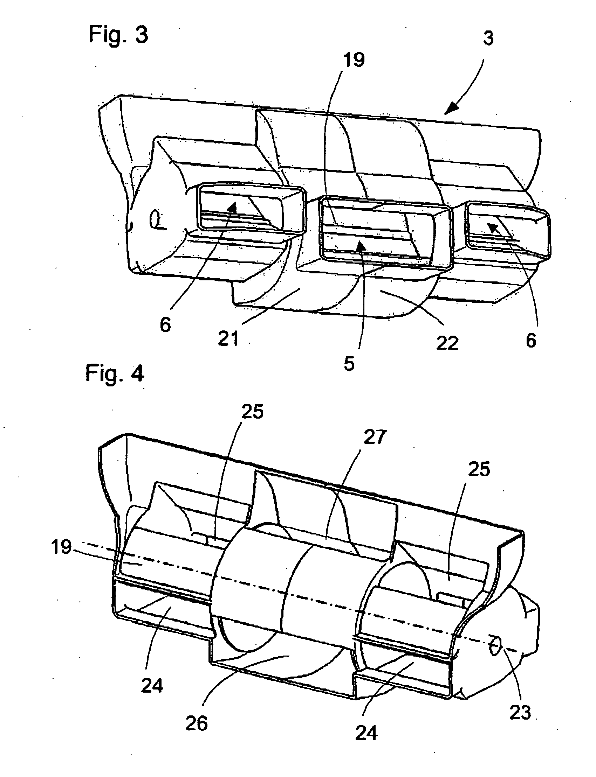

Fig. 3 ist eine separate Darstellung des Modulabschnitts 3 mit einem linken Fondfußraumversorgungsauslass 6 und einem rechten Fondfußraumversorgungsauslass 6. Zwischen diesen Fondfußraumversorgungsauslässen 6 ist ein Fondbelüftungsauslass 5 vorgesehen. Der Modulabschluss 3 ist in eine linke Hälfte 21 und eine rechte Hälfte 22 aufgeteilt. In den Modulabschnitt 3 ist die Fondraumklappe 19 eingesetzt.

In Fig. 4 ist die eingesetzte Fondraumklappe 19 im Modulabschnitt 3 noch besser erkennbar. Die Fondraumklappe 19 ist dabei um eine Drehachse 23 drehbar in dem Modulabschnitt 3 gelagert. Die Drehachse 23 ist orthogonal zur Längsachse 4 des Gehäuses ausgerichtet.

In Fig. 4 ist ein linker Fondfußraumkaltluftbereich 24 und ein rechter Fondfußraumkaltluftbereich 24 im unteren Bereich jeweils außen am Modulabschnitt 3 vorgesehen. Oberhalb dieser Fondfußraumkaltluftbereiche 24, ebenfalls außen am Modulabschnitt 3, sind Fondfußraumwarmluftbereiche 25 vorgesehen. Über die Bereiche 24 und 25 wird Kaltluft und/ oder Warmluft zugeführt. Mittig im Modulabschnitt 3 ist ein Fondbelüftungskaltluftbereich 26 und ein Fondbelüftungswarmluftbereich 27 vorgesehen. Über diese zwei Bereiche 26 und 27 wird Kalt- und/ oder Warmluft zum Fondbelüftungsauslass 5 geführt.

Es ist möglich, dass der Modulabschnitt 3 eine Trennebene mittig im Fondbelüftungsauslass 5 und durch die Fondbelüftungskalt- und -warmluftbereiche 26, 27 hindurchragend ausbildet, so dass der gesamte Fondbereich in eine linke und rechte Seite unterteilt und mit unterschiedlich temperierter Luft beaufschlagbar ist. Derart lässt sich eine so genannte 4-Zonen-Regelung im Kraftfahrzeuginneren realisieren.

Es wäre dabei von Vorteil, die Fondraumklappe 19 in eine rechte und linke Hälfte zu trennen, so dass beide Hälften der Fondraumklappe unabhängig voneinander bedienbar wären. Hierfür sind jedoch zusätzliche Betätigungselemente erforderlich.

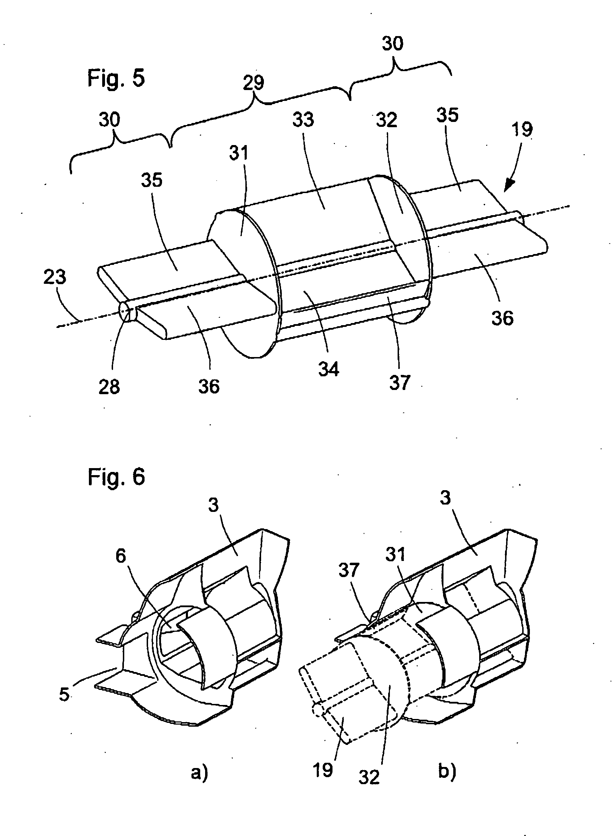

In Fig. 5 ist die Fondraumklappe 19 mit einer Welle 28 dargestellt, welche die Drehachse 23 aufnimmt. Die Fondraumklappe 19 weist einen mittleren Klappenbereich 29 und zwei seitliche Klappenbereiche 30 auf. Der mittlere Klappenbereich 29 ist von den seitlichen Klappenbereichen 30 durch jeweils eine Scheibe 31 und 32 getrennt. Die Scheiben 31 und 32 stehen senkrecht auf der Drehachse 23. Die Scheiben 31 und 32 liegen im Betriebszustand an der Innenwandung des Modulabschnittes 3 an, so dass keine bis nur geringe Leckageluftmengen zwischen den Scheiben 31 und/ oder 32 und der an diese angrenzenden Oberfläche des Modulabschnittes 3 hindurch gelangt.

Beiderseits der Welle 28 weist der mittlere Klappenbereich 29 eine vordere Leitfläche 33 und eine hintere Leitfläche 34 auf. Die seitlichen Klappenbereiche 30 weisen ebenfalls beiderseits der Welle 28 eine vordere Leitfläche 35 und eine hintere Leitfläche 36 auf. Die vordere Leitfläche 33 und die hintere Leitfläche 34 liegen nicht in ein und derselben Ebene. Auch die vordere Leitfläche 35 und die hintere Leitfläche 36 liegen nicht in ein und derselben Ebene. Die Leitflächen 33 bis 36 liegen in jeweils eigenen Ebenen, die nicht deckungsgleich zu den jeweils anderen drei Ebenen liegen. Die Ebenen der Leitflächen 33 bis 36 sind so an der Fondraumklappe 19 angeordnet, dass sie sich jeweils im Bereich der Drehachse 23 schneiden.

Die hintere Leitfläche 34, also die Leitfläche, die dem Fondbelüftungsauslass 5 am nächsten ist, weist einen Funktionssteg 37 auf. Der Funktionssteg 37 steht senkrecht auf der hinteren Leitfläche 34.

Fig. 6a zeigt eine Hälfte des Modulabschnittes 3 mit noch nicht eingebauter Fondraumklappe 19. Die Fondraumklappe 19 ist allerdings gestrichelt in der linken Hälfte des Modulabschnittes 3 in Fig. 6b dargestellt.

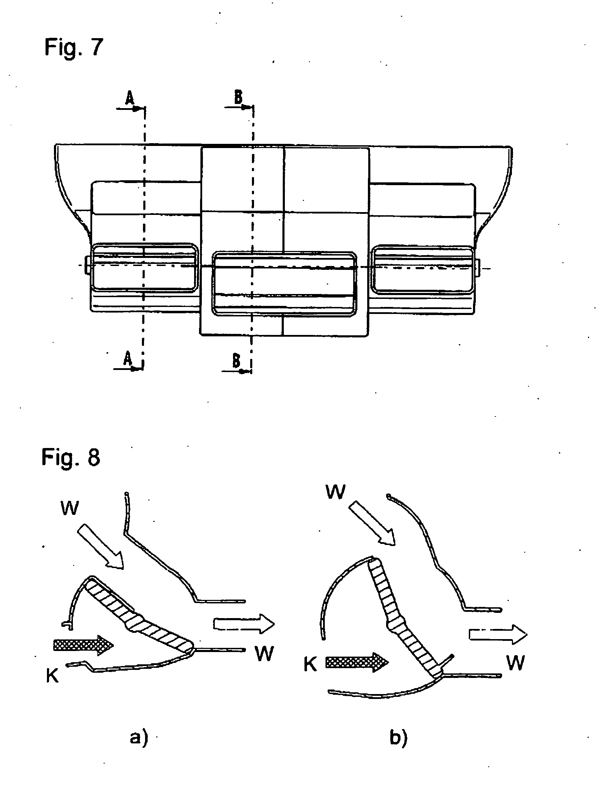

Fig. 7 zeigt die Lage der Schnittlinien A-A und B-B im Modulabschnitt 3.

In den Figuren 8 bis 11 werden unterschiedliche Fondraumklappenstellungen erläutert, wobei die Figuren 8a, 9a, 10a und 11a die Stellung des seitlichen Klappenbereiches 30 und die Figuren 8b, 9b, 10b und 11b die Stellung des mittleren Klappenbereiches 29 wiedergeben.

In den Figuren 8a und 8b ist die Fondraumklappe 19 in einer Stellung dargestellt, in der Kaltluft weder zum Fondbelüftungsauslass 5 noch zum Fondfußraumversorgungsauslass 6 gelangen kann. Lediglich Warmluft W kann zu diesen Auslässen 5 und 6 gelangen.

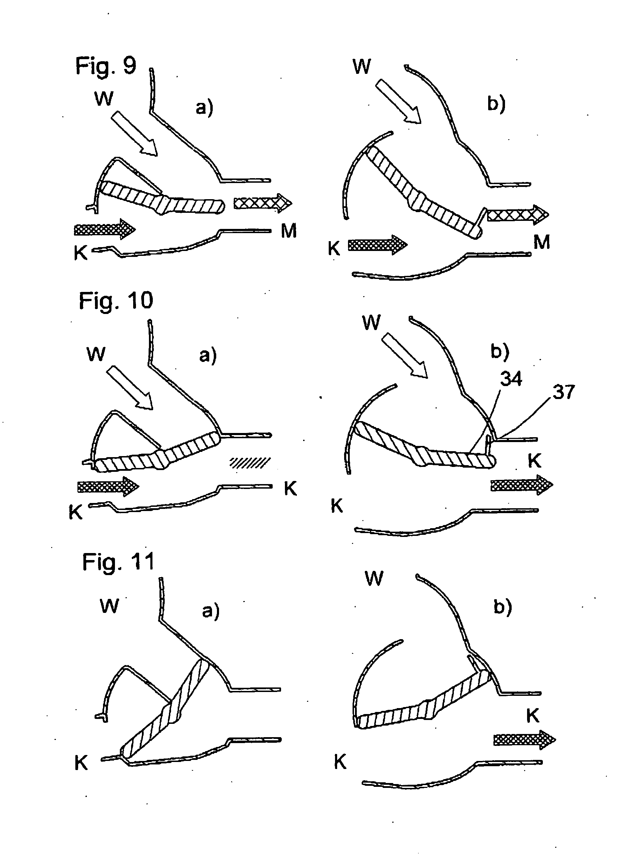

Die Figuren 9a und 9b zeigen eine mittlere Position der Fondraumklappe 19, in der sowohl Kaltluft K als auch Warmluft W in Richtung zum Fondlüftungsauslass 5 und Fondfußraumversorgungsauslass 6 hin strömend gemischt wird und dort als Mischluft M austritt.

Die Figuren 10a und 10b zeigen die Position der Fondraumklappe 19, in welcher der seitliche Klappenbereich 30 und der mittlere Klappenbereich 29 die Warmluftzufuhr zu dem Fondbelüftungsauslass 5 und dem Fondfußraumversorgungsauslass 6 unterbinden. Dabei dichtet die hintere Leitfläche 36 den Warmluftzufuhrkanal für die Warmluft W ab. Im mittleren Klappenbereich 29 erfolgt die Abdichtung insbesondere durch die hintere Leitfläche 34 mit dem Funktionssteg 37. Lediglich Kaltluft K gelangt dann zum Fondbelüftungsauslass 5 und zum Fondfußraumversorgungsauslass 6.

Die Fig. 11a und 11b geben die Extremposition der Fondraumklappe wieder, in der jegliche Luftzufuhr, d.h. Kaltluftzufuhr K und Warmluftzufuhr W, durch die vordere Leitfläche und die hintere Leitfläche 35 und 36 des seitlichen Klappenbereichs 30 abgesperrt ist. Gleichzeitig ist durch die vordere Leitfläche 33 und die hintere Leitfläche 34 des mittleren Klappenbereiches 29 lediglich die Warmluftzufuhr W abgesperrt. Aus dem Fondfußraumversorgungsauslass 6 gelangt somit keine Luft mehr, wohingegen aus dem Fondbetüftungsaustass 5 die maximal mögliche Kakluftmenge K austritt.

## Patentansprüche

1. Klimaanlage (1) für ein Kraftfahrzeug mit einer im Gehäuse (2) angeordneten Heizvorrichtung (7), mehreren im Gehäuse (2) ausgebildeten Luftkanälen, einen im Gehäuse (2) ausgebildeten ersten Auslassbereich (12), und einen im Gehäuse (2) ausgebildeten zweiten Auslassbereich (13), wobei der zweite Auslassbereich (13) in wenigstens einen Fondfußraumversorgungsauslass (6) und wenigstens einen Fondbelüftungsauslass (5) unterteilt ist, wobei stromabwärts von der Heizvorrichtung (7) zum Mischen von Warm- und Kaltluft sowie zum Verteilen der aus dem wenigstens einen Fondfußraumversorgungsauslass (6) und dem wenigstens einen Fondbelüftungsauslass (5) zu entlassenden Luft eine einzige Fondraumklappe (19) angeordnet ist und wobei die Heizvorrichtung von einem eine Luftzufuhr zur Heizvorrichtung (7) verhindernden Gehäuseabschnitt umgeben ist, der eine erste Öffnung (9) stromaufwärts von der Heizvorrichtung (7) aufweist, die durch eine Resterwärmungsklappe (11) verschließbar ist und in dem Gehäuseabschnitt eine weitere stromaufwärts der Heizvorrichtung (7) angeordnete zweite Öffnung (10) zum Hindurchleiten von Kaltluft zum zweiten Auslassbereich (13) durch die Heizvorrichtung (7) vorgesehen ist, wobei die zweite Öffnung (10) unterhalb der ersten Öffnung (9) angeordnet ist, **dadurch gekennzeichnet, dass** die zweite Öffnung nicht durch eine Klappe verschließbar ist.

2. Klimaanlage (1) nach Anspruch 1, welche im Gehäuse (2) einen Verdampfer (15) aufweist, der Kaltluft erzeugt.

3. Klimaanlage (1) nach Anspruch 1 oder 2, wobei ein Bypasskanal (18) zum erwärmungslosen Vorbeiführen der Kaltluft (K) an der Heizvorrichtung (7) vorgesehen ist.

4. Klimaanlage (1) nach einem der Ansprüche 1 bis 3, wobei die Fondraumklappe (19) im unteren Bereich der Klimaanlage (1) angeordnet ist, vorzugsweise auf Höhe der Unterkante der Heizvorrichtung (7).

5. Klimaanlage (1) nach einem der Ansprüche 1 bis 4, wobei der Fondfußraumversorgungsauslass (6) neben dem Fondbelüftungsauslass (5), vorzugsweise beiderseits des Fondbelüftungsauslasses (5), auch vorzugsweise im Wesentlichen In gleicher Höhe zum Fondbelüftungsauslass (5), angeordnet ist.

6. Klimaanlage (1) nach einem der Ansprüche 1 bis 5, wobei die Fondraumklappe (19) durch sich quer zur Drehachse der Fondraumklappe (19) erstreckende Scheiben (31, 32) in einen mittleren Klappenbereich (29) und zwei außerhalb davon befindliche seitliche Klappenbereiche (30) unterteilt ist.

7. Klimaanlage (1) nach Anspruch 6, wobei der mittlere Klappenbereich (29) einen am Rand der dem Fondbelüftungsauslass (5) zugewandten Leitfläche verlaufenden Funktionssteg (37) aufweist, welcher sich im Wesentlichen senkrecht davon und im Wesentlichen quer zur Richtung der Warmluftzufuhr erstreckt.

8. Klimaanlage (1) nach Anspruch 6 oder 7, wobei die Fondraumklappe (19) so ausgebildet und angeordnet ist, dass in einer Extremstellung, in der ausschließlich Kaltluft (K) zu dem Fondbelüftungsauslass (5) gelangen kann, der seitliche Klappenbereich (30) eine Luftzufuhr zu dem Fondfußraumversorgungsauslass (6) verhindert.

9. Klimaanlage (1) nach Anspruch 8, wobei der seitliche Klappenbereich (30) den Fondfußraumversorgungsauslass (6) verschließt.

10. Klimaanlage (1) nach einem der Ansprüche 6 bis 9, wobei der mittlere und seitliche Klappenbereich (30) der Fondraumklappe (19) sowie die Scheiben (31, 32) aus einem integralen Bauteil bestehen, das auch eine Welle (28) umfasst, durch welche die Drehachse (23) der Fondraumklappe (19) verläuft.

11. Klimaanlage (1) nach einem der Ansprüche 1 bis 10, wobei das Gehäuse (2) entlang einer Ebene, in der die Längsachse (4) des Gehäuses (2) verläuft, zweigeteilt ist.

12. Klimaanlage (1) nach einem der Ansprüche 1 bis 11, wobei zwischen der Resterwärmungsklappe (11) und dem Gehäuseabschnitt eine Dichteinrichtung angeordnet ist.

13. Klimaanlage (1) nach einem der Ansprüche 1 bis 12, wobei das Gehäuse (2) einen Modulabschnitt (3) aufweist, in dem der Fondfußraumversorgungsauslass (6), der Fondbelüftungsauslass (5) und die Fondraumklappe (19) angeordnet sind.

## Claims

1. An air conditioner (1) for a motor vehicle, comprising a heating device (7) that is arranged in the housing (2), a plurality of air ducts that are formed in the housing (2), a first outlet region (12) that is formed in the housing (2), and a second outlet region (13) that is formed in the housing (2), wherein the second outlet region (13) is divided into at least one rear footwell supply outlet (6) and at least one rear ventilation outlet (5), wherein a single rear space damper door (19) is arranged downstream of the heating device (7) for mixing warm and cold air and for distributing the air that is to be discharged from the at least one rear footwell supply outlet (6) and the at least one rear ventilation outlet (5), and wherein the heating device is surrounded by a housing section preventing air from being supplied to the heating device (7), the housing section upstream of the heating device (7) having a first opening (9), which can be closed by a residual heating flap (11), and a further second opening (10), which is arranged in the housing section upstream of the heating device (7) for conducting cold air through to the second outlet region (13) by the heating device (7), wherein the second opening (10) is arranged beneath the first opening (9), **characterized in that** the second opening cannot be closed by a flap.

2. The air conditioner (1) according to claim 1, comprising an evaporator (15), which generates cold air, in the housing (2).

3. The air conditioner (1) according to claim 1 or 2, wherein a bypass duct (18) is provided so as to conduct the cold air (K) past the heating device (7) without heating this air.

4. An air conditioner (1) according to any one of claims 1 to 3, wherein the rear space damper door (19) is arranged in the lower region of the air conditioner (1), preferably at the level of the lower edge of the heating device (7).

5. An air conditioner (1) according to any one of claims 1 to 4, wherein the rear footwell supply outlet (6) is arranged next to the rear ventilation outlet (5), preferably on both sides of the rear ventilation outlet (5), and also preferably essentially at the same level as the rear ventilation outlet (5).

6. An air conditioner (1) according to any one of claims 1 to 5, wherein the rear space damper door (19) is divided by disks (31, 32), which extend transversely relative to the rotational axis of the rear space damper door (19), into a center damper door region (29) and two lateral damper door regions (30) located outside thereof.

7. The air conditioner (1) according to claim 6, wherein the center damper door region (29) comprises a functional web (37) running at the edge of the guide surface that faces the rear ventilation outlet (5), this functional web extending essentially perpendicularly relative to the damper door region and essentially transversely relative to the direction of the warm air supply.

8. The air conditioner (1) according to claim 6 or 7, wherein the rear space damper door (19) is designed and arranged so that, in an extreme position in which only cold air (K) can reach the rear ventilation outlet (5), the lateral damper door region (30) prevents air from being supplied to the rear footwell supply outlet (6).

9. The air conditioner (1) according to claim 8, wherein the lateral damper door region (30) closes the rear footwell supply outlet (6).

10. An air conditioner (1) according to any one of claims 6 to 9, wherein the center and the lateral damper door regions (30) of the rear space damper door (19) and the disks (31, 32) are made of an integral component, which also comprises a shaft (28), through which the rotational axis (23) of the rear space damper door (19) extends.

11. An air conditioner (1) according to any one of claims 1 to 10, wherein the housing (2) is divided into two parts along a plane, in which the longitudinal axis (4) of the housing (2) runs.

12. An air conditioner (1) according to any one of claims 1 to 11, wherein a sealing element is arranged between the residual heating flap (11) and the housing section.

13. An air conditioner (1) according to any one of claims 1 to 12, wherein the housing (2) comprises a module section (3), in which the rear footwell supply outlet (6), the rear ventilation outlet (5) and the rear space damper door (19) are arranged.

## Revendications

1. Système de climatisation (1) pour un véhicule à moteur, comprenant un dispositif de chauffage (7) disposé dans le carter (2), plusieurs conduits d'air configurés dans le carter (2), une première zone de sortie (12) configurée dans le carter (2) et une deuxième zone de sortie (13) configurée dans le carter (2), où la deuxième zone de sortie (13) est subdivisée en au moins une sortie d'alimentation (6) de l'espace à l'arrière pour les jambes et en au moins une sortie de ventilation à l'arrière (5), où un unique volet de l'espace arrière (19) est disposé en aval du dispositif de chauffage (7), pour mélanger de l'air chaud et de l'air froid ainsi que pour répartir de l'air devant sortir de la sortie d'alimentation (6) - au moins au nombre de un - de l'espace à l'arrière pour les jambes et de la sortie de ventilation à l'arrière (5) au moins au nombre de un, et où le dispositif de chauffage est entouré par une partie de carter empêchant une alimentation d'air jusqu'au dispositif de chauffage (7), partie de carter qui présente une première ouverture (9) placée en amont du dispositif de chauffage (7), ouverture qui peut être fermée par un volet de chauffage résiduel (11), et il est prévu, dans la partie de carter, une autre deuxième ouverture (10) disposée en amont du dispositif de chauffage (7), pour faire passer de l'air froid jusqu'à la deuxième zone de sortie (13), à travers le dispositif de chauffage (7), où la deuxième ouverture (10) est disposée au-dessous de la première ouverture (9), **caractérisé en ce que** la deuxième ouverture ne peut pas être fermée par un volet.

2. Système de climatisation (1) selon la revendication 1, qui présente, dans le carter (2), un évaporateur (15) qui produit de l'air froid.

3. Système de climatisation (1) selon la revendication 1 ou 2, où il est prévu un conduit de dérivation (18) servant à faire passer de l'air froid (K), sans chauffer, devant le dispositif de chauffage (7).

4. Système de climatisation (1) selon l'une quelconque des revendications 1 à 3, où le volet de l'espace arrière (19) est disposé dans la zone inférieure du système de climatisation (1), de préférence à hauteur du bord inférieur du dispositif de chauffage (7).

5. Système de climatisation (1) selon l'une quelconque des revendications 1 à 4, où la sortie d'alimentation (6) de l'espace à l'arrière pour les jambes est disposée à proximité de la sortie de ventilation à l'arrière (5), de préférence des deux côtés de la sortie de ventilation à l'arrière (5), de préférence, aussi, pratiquement à la même hauteur que la sortie de ventilation à l'arrière (5).

6. Système de climatisation (1) selon l'une quelconque des revendications 1 à 5, où le volet de l'espace arrière (19) est subdivisé, par des disques (31, 32) s'étendant transversalement par rapport à l'axe de rotation du volet de l'espace arrière (19), en une zone de volet centrale (29) et en deux zones de volet latérales (30) situées à l'extérieur de ladite zone de volet centrale.

7. Système de climatisation (1) selon la revendication 6, où la zone de volet centrale (29) présente une barrette fonctionnelle (37) se trouvant au bord de la surface déflectrice tournée vers la sortie de ventilation à l'arrière (5), barrette fonctionnelle qui s'étend pratiquement de façon perpendiculaire à ladite surface déflectrice et pratiquement de façon transversale par rapport à la direction de l'alimentation en air chaud.

8. Système de climatisation (1) selon la revendication 6 ou 7, où le volet de l'espace arrière (19) est conçu et disposé de manière telle, que dans une position extrême, dans laquelle exclusivement de l'air froid (K) peut parvenir jusqu'à la sortie de ventilation à l'arrière (5), la zone de volet latérale (30) empêche une alimentation d'air jusqu'à la sortie d'alimentation (6) de l'espace à l'arrière pour les jambes.

9. Système de climatisation (1) selon la revendication 8, où la zone de volet latérale (30) ferme la sortie d'alimentation (6) de l'espace à l'arrière pour les jambes.

10. Système de climatisation (1) selon l'une quelconque des revendications 6 à 9, où la zone de volet centrale et latérale (30) du volet de l'espace arrière (19) ainsi que les disques (31, 32) se composent d'une pièce monobloc qui comprend aussi un arbre (28) à travers lequel passe l'axe de rotation (23) du volet de l'espace arrière (19).

11. Système de climatisation (1) selon l'une quelconque des revendications 1 à 10, où le carter (2) est divisé en deux parties, le long d'un plan dans lequel passe l'axe longitudinal (4) du carter (2).

12. Système de climatisation (1) selon l'une quelconque des revendications 1 à 11, où un dispositif d'étanchéité est disposé entre le volet de chauffage résiduel (11) et la partie du carter.

13. Système de climatisation (1) selon l'une quelconque des revendications 1 à 12, où le carter (2) présente une partie modulaire (3) dans laquelle sont disposés la sortie d'alimentation (6) de l'espace à l'arrière pour les jambes, la sortie de ventilation à l'arrière (5) et le volet de l'espace arrière (19).
